# FASCICULE DE BREVET EUROPEEN

(11) **EP 2 923 826 B1**
(45) Date de publication et mention de la délivrance du brevet: **07.11.2018**
(21) Numéro de dépôt: 14305456.7
(22) Date de dépôt: 28.03.2014
(51) Int. Cl.: B29D 11/00, B33Y 80/00, B33Y 70/00, B29C 64/112

(54) **Lentille ophtalmique et procédé de fabrication d'une telle lentille**
Ophthalmische Linse und Herstellungsverfahren einer solchen Linse
Ophthalmic lens and method for manufacturing such a lens

(43) Date de publication de la demande: 30.09.2015
(73) Titulaire: Essilor International, 94220 Charenton-le-Pont (FR)
(72) Inventeur: Granger, Bérangère, 94227 Charenton-le-Pont, Cedex (FR); Baillet, Gilles, 94227 Charenton-le-Pont, Cedex (FR)
(74) Mandataire: Jacobacci Coralis Harle

(56) Documents cités:
- JP-A- S63 204 229
- US-A- 4 022 855
- US-A1- 2001 048 968
- US-A1- 2004 008 319
- H.-J Trost ET AL: "USING DROP-ON-DEMAND TECHNOLOGY FOR MANUFACTURING GRIN LENSES", , 15 novembre 2001 (2001-11-15), XP055122645, Extrait de l'Internet: URL:http://www.microfab.com/archive/about/ papers/ASPE_01.pdf [extrait le 2014-06-11]

## Description

### DOMAINE TECHNIQUE AUQUEL SE RAPPORTE L'INVENTION

La présente invention concerne de manière générale l'optique de correction des amétropies.

Elle concerne plus particulièrement une lentille ophtalmique négative destinée à la correction de la myopie et un procédé de fabrication d'une telle lentille.

### ARRIERE-PLAN TECHNOLOGIQUE

Les lentilles ophtalmiques utilisées pour le traitement de la myopie (par exemple des verres de lunettes) présentent classiquement une concavité au centre de la lentille afin de faire diverger les rayons lumineux pour compenser la convergence trop rapide de ceux-ci dans l'oeil du myope.

L'épaisseur de ces lentilles est donc croissante à mesure que l'on s'éloigne du centre de la lentille et peut atteindre des épaisseurs de plusieurs millimètres à la périphérie de la lentille, en particulier lorsqu'une forte correction est requise.

Une telle épaisseur à la périphérie pose des problèmes tant esthétiques que pratiques, en particulier dans le cas des verres de lunette où la lentille est portée par une monture.

Pour diminuer cette épaisseur, une solution consiste à choisir pour réaliser la lentille un matériau ayant un indice de réfraction élevé. De tels matériaux ont toutefois en général un pouvoir dispersif important, qui peut dégrader le confort visuel du porteur, avec par exemple une perception de franges colorées.

Le document JP S63-204 229 décrit la réalisation d'une lentille de contact négative à partir d'une tige formée d'un polymère transparent constitué de telle sorte que l'indice de réfraction augmente quasi-continûment de sa partie centrale à sa partie périphérique.

L'article "Using Drop-On-Demand Technology for Manufacturing GRIN Lenses". de H.-J. Trost *et al*., propose par ailleurs, sans référence à l'optique ophtalmique, de fabriquer des lentilles à gradient d'indice au moyen d'une tête d'impression qui libère successivement des gouttes de matériau optique.

### OBJET DE L'INVENTION

Dans ce contexte, la présente invention propose un procédé de fabrication d'une lentille ophtalmique négative comprenant une partie centrale et une partie périphérique, caractérisé en ce qu'il comprend les étapes suivantes :
- formation de la partie centrale par constitution de voxels d'un premier matériau ayant un premier indice de réfraction, la partie centrale présentant une zone à sa périphérie ;
- formation de la partie périphérique à partir de ladite zone et contigüe au pourtour de ladite zone, par constitution de voxels d'au moins un second matériau ayant un second indice de réfraction, le second indice de réfraction étant strictement supérieur au premier indice de réfraction.

On obtient ainsi, grâce à un procédé de fabrication additive, une lentille ophtalmique dont la partie centrale (qui correspond à la zone utile de la lentille) a un indice de réfraction relativement faible, ce qui permet notamment d'éviter le phénomène d'irisation mentionné ci-dessus, mais dont les bords seront d'épaisseur limitée grâce à l'utilisation d'un matériau ayant un indice de réfraction supérieur pour former la partie périphérique.

La fabrication additive est une technique de fabrication définie dans la norme internationale ASTM 2792-12 et vise un procédé d'assemblage d'éléments de matériau pour obtenir un objet solide tridimensionnel sur la base d'un modèle tridimensionnel numérique.

Un tel procédé est parfois dénommé impression 3D ou impression de matière du fait que des couches successives de matériaux peuvent être déposées successivement l'une sur la précédente. Les couches, qui correspondent à des sections virtuelles extraites du modèle tridimensionnel, sont assemblées et fusionnées afin de former l'objet solide tridimensionnel, ici une lentille ophtalmique.

La fabrication additive vise notamment des procédés qui créent des objets solides par juxtaposition d'éléments de volume ou voxels selon une géométrie prédéterminée définie par le modèle tridimensionnel (typiquement au sein d'un fichier CAO - "*Conception Assistée par Ordinateur*"). On comprend par "*juxtaposition*" des opérations séquentielles, par exemple notamment le dépôt d'une couche sur la précédente, ou le dépôt d'un voxel au contact ou à proximité d'un voxel précédemment déposé.

On entend par ailleurs par "*voxel*" un élément individuel qui, en combinaison avec d'autres voxels, défini un élément intermédiaire, par exemple une couche. Le terme "*voxel*" peut également s'appliquer à un élément intermédiaire, par exemple une couche, en particulier lorsque des techniques de stéréo-lithographie sont utilisées.

Ainsi, selon la technique de fabrication additive utilisée, la lentille ophtalmique pourra être réalisée voxel par voxel, ligne par ligne, couche par couche.

La constitution de voxels peut comprendre par exemple :
- le dépôt d'une goutte de composition liquide sur un substrat ;
- l'application d'une composition liquide sous forme d'une couche mince et la polymérisation sélective de cette couche mince ;
- le dépôt d'une composition liquide sous forme de fil.

Le premier indice de réfraction est par exemple inférieur ou égal à 1,59, de préférence compris entre 1,50 et 1,59 inclus. Le second indice de réfraction est par exemple supérieur ou égal à 1,60, de préférence compris entre 1,60 et 1,80 inclus.

On peut prévoir en outre une étape de formation d'une partie intermédiaire située à partir de ladite zone périphérique de la partie centrale et ladite partie périphérique, par constitution de voxels comprenant un premier matériau et un second matériau, l'indice de réfraction de ladite partie intermédiaire étant strictement supérieure à l'indice de réfraction de ladite partie centrale et strictement inférieure à l'indice de réfraction de ladite partie périphérique.

Selon un mode de réalisation envisageable, la partie intermédiaire peut être constituée d'une pluralité de parties intermédiaires à partir de ladite partie centrale et ladite partie périphérique, l'indice de réfraction de chacune desdites parties intermédiaires étant croissante de façon radiale de la partie centrale vers la partie périphérique, cette variation d'indice radiale étant obtenu par la constitution de voxels comprenant successivement une quantité décroissante dudit de premier matériau au regard d'une quantité croissante dudit second matériau.

Selon une première possibilité, la constitution de voxels du premier matériau est réalisée par dépôt d'une première composition polymérisable au moyen d'une première buse d'impression et la constitution de voxels du second matériau est réalisée par dépôt d'une seconde composition polymérisable, différente de la première composition polymérisable, au moyen d'une seconde buse d'impression, lesdites première et seconde buses d'impression étant une seule buse ou deux buses distinctes.

Selon une seconde possibilité, la constitution de voxels du premier matériau est réalisée par dépôt d'un polymère thermoplastique à un état initial liquéfié ou en phase fluide au moyen d'une première unité de décharge et la constitution de voxels du second matériau est réalisée par dépôt d'un polymère thermoplastique à un état initial liquéfié ou en phase fluide au moyen d'une seconde unité de décharge, les première et seconde unités de décharge étant une seule unité ou deux unités distinctes.

Selon d'autres possibilités, la constitution de voxels du premier et du second matériau peut être réalisée par fusion de poudre polymère, ou par stéréolithographie, ou encore par extrusion d'un fil thermoplastique.

La partie centrale présente par exemple une forme générale circulaire ou elliptique. Il est également proposé une lentille ophtalmique négative obtenue au moyen d'un procédé tel qu'exposé ci-dessus.

La lentille ophtalmique obtenue est par exemple une lentille sphérique unifocale concave, d'une dioptrie négative comprise entre -0,25 D et -20,00 D, et plus particulièrement comprise entre -0,25 D et -12,00 D.

Selon des modes possibles de réalisation,
- la pluralité de voxels (ou éléments de volume) prédéterminés juxtaposés et superposés forme des couches superposées qui présentent chacune une épaisseur constante ou variable sur la longueur et/ou qui présentent toutes la même épaisseur ou pas ;
- le matériau est un photopolymère comportant une ou plusieurs familles de molécules ayant une ou plusieurs fonctions acryliques, méthacryliques, acrylates, méthacrylates, une famille de molécules ayant une ou plusieurs fonctions époxy, thioépoxy, thiolène, une famille de molécules ayant une ou plusieurs fonction thiol, sulfide, épisulfide, une famille de molécules ayant une ou plusieurs fonctions vinyle éther, vinyle caprolactame, vinylpyrolidone, une famille de matériau de type hyperbranchée, de type hybride organique/inorganique, ou une combinaison de ces fonctions ; les fonctions chimiques mentionnées pouvant être portées par des monomères ou des oligomères ou une combinaison de monomères et oligomères ;
- le matériau peut comporter au moins un photo-initiateur ;
- le matériau peut comporter des nanoparticules, en particulier des nanoparticules ayant des dimensions par exemple inférieures aux longueurs d'onde visibles, telles que par exemple des :
   - nanoparticules de carbonates de métaux alcalino-terreux comme par exemple le calcium carbonate,
   - nanoparticules de sulfates de métaux alcalino-terreux, comme par exemple le barium sulphate,
   - nanoparticules d'oxydes métalliques, comme par exemple, l'alumine, l'oxyde de zinc ou le dioxyde de titane,
   - nanoparticules d'oxides de métalloides, comme par exemple, le dioxide de silice,
   - nanoparticules de sulfures métalliques, notamment sulfure de zinc,
   - siloxanes, comme par exemple, les silsesquioxanes,
   - nanoparticules pouvant être fonctionnalisées par des groupements organiques polymérisables,
   l'incorporation de telles nanoparticules au sein d'un monomère permettant notamment d'augmenter l'indice de celui-ci ;
- le matériau peut comporter, dans au moins certains des éléments de volume prédéterminés, un pigment ou un colorant, par exemple un colorant qui appartient aux familles des azo, ou rhodamines, ou cyanines, ou polyméthines, ou mérocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tels que des chélates ou des cryptâtes de terres rares ; l'incorporation de tels matériau au sein de la formulation de monomère intiales permettant notamment d'obtenir des verres teintés, voir à gradient de teinte ;
- le procédé de fabrication comporte une étape supplémentaire d'irradiation thermique, et/ou une étape supplémentaire d'irradiation actinique, tels que, par exemple, dans les longueurs d'ondes du spectre des ultra-violet, voire aucune étape d'irradiation ;
- le procédé de fabrication comporte une étape où la prise en compte de la variation d'indice du matériau de la lentille ophtalmique peut se faire sous la forme d'une boucle d'optimisation itérative selon des procédures d'optimisation connues ;
- le matériau de la lentille ophtalmique comporte optionnellement un ou plusieurs colorants, et/ou des nanoparticules configurées pour modifier sa transmission optique et/ou son aspect, et/ou des nanoparticules ou additifs configurés pour modifier ses propriétés mécaniques ;
- la machine de fabrication additive n'est pas une machine d'impression tridimensionnelle mais plutôt une machine de stéréolithographie, (SLA pour « *Stereolithography Apparatus* » en anglais) ou une machine d'extrusion par fil thermoplastique, aussi appelée machine de dépôt à fil tendu (FDM pour « *Fused Deposition Modeling* » en anglais) ;
- l'unité de contrôle et de commande comporte un microcontrôleur en place du microprocesseur.

On rappelle plus généralement que l'invention ne se limite pas aux exemples décrits et représentés.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un exemple de machine de fabrication additive utilisable dans le cadre de la présente invention ;
- la figure 2 représente les étapes principales d'un premier exemple de procédé de fabrication d'une lentille ophtalmique conforme aux enseignements de l'invention ;
- la figure 3 représente une vue en coupe d'une lentille ophtalmique obtenue par le procédé de la figure 2 ;
- la figure 4 représente les étapes principales d'un second exemple de procédé de fabrication d'une lentille ophtalmique conforme aux enseignements de l'invention ;
- la figure 5 représente une vue en coupe d'une lentille ophtalmique obtenue par le procédé de la figure 4.

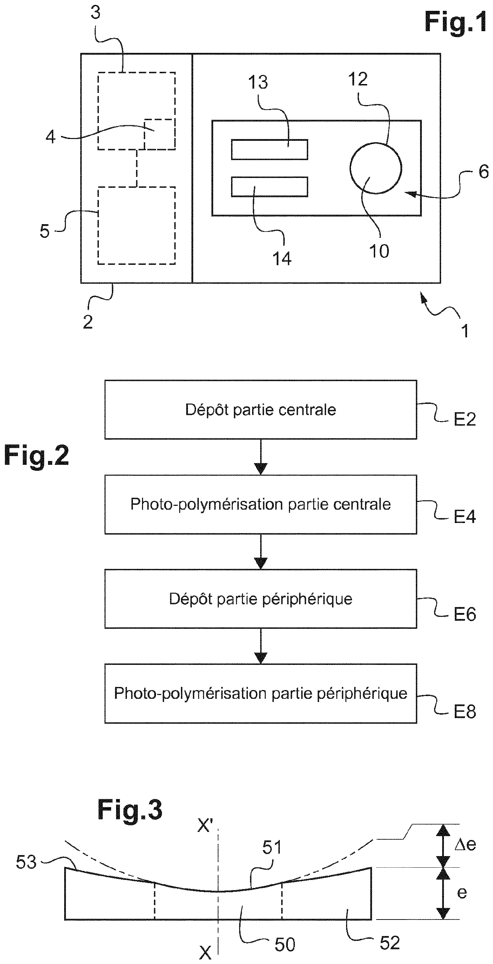

La figure 1 représente une machine de fabrication additive 1 utilisable dans le cadre de la présente invention.

Cette machine de fabrication additive 1 comprend une unité de contrôle et de commande 2, une première buse 13, une seconde buse 14 et un support de fabrication 12 sur lequel sera fabriqué, au moyen d'un procédé de fabrication additive tel que décrit dans la suite, une lentille ophtalmique 10.

La machine de fabrication additive 1 comprend également une ouverture 6, ici couverte pendant la phase de fabrication par une vitre amovible, ce qui permet d'accéder à la lentille ophtalmique 10 après fabrication sur le support de fabrication 12 au moyen du procédé de fabrication additive.

Le support de fabrication 12 comporte un corps pourvu d'une surface de fabrication qui présente une géométrie globale indépendante ou dépendante, pour tout ou partie, de la géométrie d'au moins une surface de l'objet à réaliser par fabrication additive. Dans l'exemple décrit ici, la surface de fabrication est plane ; en variante, elle pourrait être convexe ou concave par exemple.

La première buse 13 et la seconde buse 14 font par exemple partie d'une rampe de buses; la première buse 13 et la seconde buse 14 sont chacune commandés par l'unité de contrôle et de commande 2 de manière à être déplacées par des actionneurs et à délivrer des volumes élémentaires (ou voxels) d'un matériau qui constitueront, après un traitement additionnel éventuel (telle qu'une étape de photo-polymérisation), des parties élémentaires de la lentille ophtalmique 10.

Dans l'exemple de réalisation décrit ici, la première buse 13 délivre par exemple un monomère permettant d'obtenir, après photo-polymérisation, un premier matériau, ici un dérivé (méth)acrylique d'alkyles linéaires ou branchés (ayant un indice de réfraction de 1,5), et la seconde buse 14 délivre un monomère permettant d'obtenir, après photo-polymérisation, un second matériau, ici un dérivé (méth)acrylique d'aromatiques bromés (tel que le bisphénol-a tetrabromé-éthoxylé diméthacrylate ayant un indice de réfraction de 1,6 ou le diméthacrylate de sulfure de mercaptoethyle ayant un indice de réfraction de 1,62).

De manière générale, le premier matériau a un indice de réfraction inférieur à celui du second matériau.

L'unité de contrôle et de commande 2 est pourvue d'un système de traitement de données, comprenant notamment un microprocesseur 3 et une mémoire non-volatile 4 (ici une mémoire morte ou ROM - pour "*Read Only Memory*" - intégrée au microprocesseur 3) qui mémorise des instructions d'un logiciel ou programme d'ordinateur dont l'exécution par le microprocesseur 3 permet la commande de la machine de fabrication additive 1, et notamment de la première buse 13 et de la seconde buse 14, et ainsi la mise en oeuvre du procédé de fabrication additive, par exemple conformément à l'un des exemples décrits ci-dessous.

L'unité de contrôle et de commande 2 comprend en outre une mémoire modifiable 5, ici une mémoire volatile de type mémoire vive ou RAM (pour "*Random Access Memory*"), qui mémorise les données utilisées durant l'exécution du logiciel et la mise en oeuvre du procédé de fabrication additive.

En variante, la mémoire non-volatile 4 et/ou la mémoire modifiable 5 pourraient être une mémoire non-volatile réinscriptible, par exemple de type EEPROM (pour "*Electrically Erasable Programmable Read-Only Memory*").

La mémoire modifiable 5 mémorise notamment des éléments de définition de la lentille ophtalmique à fabriquer 10. Ces éléments de définition ont par exemple été reçus au préalable d'un autre système de traitement de données (non représenté) connecté à la machine de fabrication 1 au moyen d'un réseau informatique.

Ces éléments de définition sont par exemple des données (typiquement sous forme d'un fichier mémorisé dans la mémoire modifiable 5) qui définissent la géométrie (tridimensionnelle) d'une partie centrale de la lentille 10 et d'une partie périphérique de la lentille 10.

En variante, les éléments de définition peuvent être des données qui définissent la fonction optique simple prescrite à la lentille ophtalmique à fabriquer 10. Selon un mode de réalisation envisageable, les éléments de définition peuvent comprendre des paramètres de personnalisation du futur porteur de lunettes équipés de la lentille ophtalmique 10 et/ou des paramètres de la géométrie de la monture qui portera la lentille ophtalmique 10. Selon un mode de réalisation particulièrement avantageux de l'invention, les éléments de personnalisation optique concernent la partie centrale de la lentille ophtalmique négative, la partie périphérique étant dédiée à des éléments de personnalisation esthétique.

En effet, on peut déduire la géométrie de la lentille ophtalmique 10 à partir de la connaissance de la fonction optique et éventuellement de paramètres de personnalisation et/ou de la monture.

Par fonction optique d'une lentille ophtalmique, on entend la réponse optique de cette lentille, c'est-à-dire une fonction définissant toute modification de propagation et de transmission d'un faisceau optique à travers la lentille concernée, quelle que soit l'incidence du faisceau optique entrant et quelle que soir l'étendue géométrique d'un dioptre d'entrée illuminé par le faisceau optique incident.

Plus précisément, dans le domaine ophtalmique, la fonction optique est définie comme la répartition des caractéristiques de puissance porteur et d'astigmatisme, des déviations prismatiques et des aberrations d'ordre supérieur associées à la lentille pour l'ensemble des directions du regard d'un porteur de cette lentille. Cela suppose bien entendu la prédétermination du positionnement géométrique de la lentille par rapport à l'oeil du porteur.

On notera également que la puissance porteur est une manière de calculer et d'ajuster la puissance de la lentille ophtalmique, qui se différencie de la puissance frontofocomètre. Le calcul en puissance porteur assure que la puissance perçue par le porteur (c'est-à-dire la puissance du faisceau de lumière qui rentre dans l'oeil), une fois la lentille positionnée dans la monture et portée par le porteur, corresponde à la puissance prescrite. La puissance porteur au niveau du centre optique d'une lentille unifocale est généralement proche de la puissance observée avec un frontofocomètre positionné en ce point.

La mémoire modifiable 5 (ou en variante la mémoire morte 4) mémorise par exemple en outre des caractéristiques des matériaux (ici le premier matériau et le second matériau) qui peuvent être formés (ici après photo-polymérisation) à partir des matériaux délivrés par la première buse 13 et la seconde buse 14. Ces caractéristiques peuvent éventuellement être prises en compte lors la détermination (par le microprocesseur 3) de la géométrie des parties à fabriquer, comme expliqué ci-après.

De même, la mémoire modifiable 5 (ou en variante la mémoire non-volatile 4) peut mémoriser des données définissant la surface de fabrication du support de fabrication 12, en particulier lorsque cette surface n'est pas plane (mais par exemple concave ou convexe comme indiqué ci-dessus), et/ou d'autres données représentant des paramètres caractéristiques de la fabrication additive, par exemple la vitesse d'avance des buses 13, 14, l'énergie et la source d'énergie mises en oeuvre pour le traitement ultérieur (ici la photo-polymérisation), par exemple ici une source émettant dans l'ultra-violet (en variante, un laser comme dans le cas d'une machine de stéréo-lithographie, ou une énergie de chauffe dans le cas d'un dépôt à fil tendu ou extrusion par fil thermoplastique).

La figure 2 représente les étapes principales d'un premier exemple de procédé de fabrication additive utilisant la machine de fabrication additive de la figure 1.

Ce procédé débute à l'étape E2 par le dépôt, au moyen de la première buse 13 et sous la commande du microprocesseur 3, d'un ensemble de voxels destinés à former la partie centrale de la lentille ophtalmique 10. La partie centrale a par exemple la forme d'un disque en projection dans un plan perpendiculaire à l'axe optique de la lentille ophtalmique 10. En variante, elle pourrait avoir une forme ovale, par exemple elliptique.

Dans le cas mentionné ci-dessus où la géométrie de la partie centrale est directement définie par des éléments de définition mémorisés en mémoire modifiable 5, le microprocesseur 3 commande la première buse 13 de sorte qu'elle dépose des voxels aux endroits spécifiés par les éléments de définition.

Dans le cas mentionné ci-dessus où la géométrie de la partie centrale est définie par la fonction optique de la lentille ophtalmique 10 et des paramètres de comportement du porteur, la géométrie de la partie centrale de la lentille ophtalmique est au préalable déterminée par le microprocesseur 3 sur la base de ces éléments. La partie centrale présente généralement un rayon compris entre 5 mm et 18 mm à partir du centre géométrique de la lentille.

Une fois le rayon de la partie centrale défini, la géométrie de la partie centrale est définie sur la base des éléments de définition représentatifs la fonction optique recherchée (ainsi que des caractéristiques des matériaux utilisés qui peuvent également être mémorisées dans la mémoire modifiable 5 comme déjà indiqué).

Une fois la géométrie de la partie centrale ainsi déterminée par le microprocesseur 3 à partir des éléments de définition mémorisés en mémoire modifiable 5, le microprocesseur 3 commande la première buse 13 de sorte qu'elle dépose des voxels aux endroits spécifiés par cette géométrie (étape E2).

On procède ensuite à une étape E4 de photo-polymérisation des voxels déposés à l'étape E2 afin de former la partie centrale. Du fait du matériau que délivre la première buse 13 comme indiqué ci-dessus, la partie centrale est formée d'un matériau transparent ayant un indice de réfraction égal à 1,50 (premier matériau).

On peut alors procéder, sous la commande du microprocesseur 3 et au moyen de la seconde buse 14, au dépôt de voxels sur tout le pourtour de la partie centrale, et notamment au contact de celle-ci, de manière à former la partie périphérique de la lentille ophtalmique 10 (étape E6). La partie périphérique a par exemple la forme d'une couronne en projection dans un plan perpendiculaire à l'axe optique.

De même que pour la partie centrale comme expliqué ci-dessus, la géométrie de la partie périphérique est par exemple directement définie par les éléments de définition mémorisés dans la mémoire modifiable 5.

En variante, comme également indiqué ci-dessus, le microprocesseur 3 détermine la géométrie de la partie périphérique sur la base des éléments de définition mémorisés dans la mémoire modifiable 5.

On procède enfin à une étape E8 de photo-polymérisation des voxels déposés à l'étape E6 ce qui permet de former la partie périphérique. Du fait du matériau que délivre la seconde buse 14 comme indiqué ci-dessus, la partie périphérique est formée d'un matériau transparent ayant un indice de réfraction supérieur ou égal à 1,60 (second matériau).

Dans l'exemple qui vient d'être décrit, on dépose dans un premier temps des voxels destinés à former la partie centrale de la lentille ophtalmique 10, puis dans un second temps des voxels destinés à former la partie périphérique de la lentille ophtalmique 10.

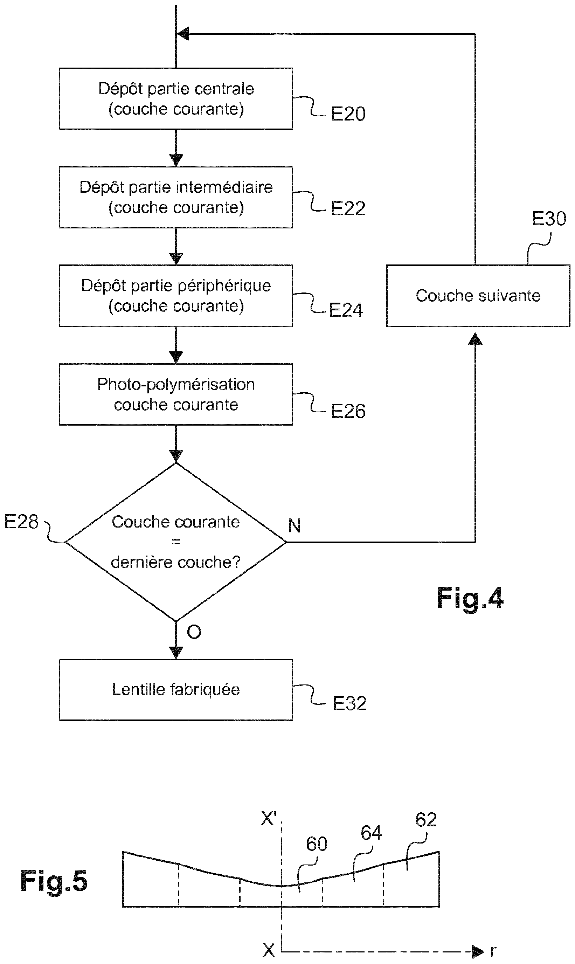

En variante, on pourrait prévoir que le dépôt des voxels soit réalisé par couches successives et que, pour chaque couche, on dépose d'une part des voxels de la couche concernée destinés à faire partie de la partie centrale et d'autre part des voxels de la couche concernée destinés à faire partie de la partie périphérique. On pourra se référer à l'exemple de procédé décrit en référence à la figure 4 pour de plus amples explications à ce sujet.

Par ailleurs, dans l'exemple décrit ci-dessus, les étapes de photo-polymérisation sont réalisées après dépôt des voxels destinés à former la partie centrale d'une part, puis après dépôt des voxels destinés à former la partie périphérique d'autre part.

En variante, les étapes de photo-polymérisation pourraient avoir lieu immédiatement après le dépôt de chaque voxel, de façon globale après le passage de la première buse 13 ou de la seconde buse 14, ou encore après le dépôt d'une couche dans le cas d'une fabrication en couches comme il vient d'être indiqué.

La figure 3 représente une vue d'une lentille ophtalmique 10 obtenue par le procédé qui vient d'être décrit.

Une telle lentille ophtalmique 10 comprend une partie centrale 50, par exemple de forme générale circulaire centrée sur un axe optique XX', ayant un indice de réfraction compris entre 1,50 et 1,59 (égal à 1,50 dans l'exemple décrit ci-dessus), et une partie périphérique 52 ayant un indice de réfraction supérieur et dont le pourtour extérieur, ici également de forme générale circulaire centrée sur l'axe optique XX', définit la circonférence externe de la lentille ophtalmique 10. La partie périphérique 52, et donc la lentille ophtalmique 10, pourrait naturellement avoir une forme extérieure distincte d'une forme circulaire, par exemple une forme extérieure adaptée à une monture de lunettes destinée à recevoir la lentille ophtalmique 10.

La lentille ophtalmique 10 est ici une lentille plan-concave qui génère une correction négative destinée à la correction de la myopie. Lors de la fabrication de la lentille 10 par la machine de fabrication additive 1, la surface plane de la lentille 10 est par exemple disposée au contact du support de fabrication 12.

Dans l'exemple représenté, la partie centrale 50 comprend une face concave 51 dont le rayon de courbure dépend de la correction que doit fournir au future porteur la lentille ophtalmique 10.

La partie périphérique 52 comprend également une face concave 53 qui s'étend à partir de la face concave 51 de la partie centrale 50. Toutefois, du fait que l'indice de réfraction de la partie périphérique est supérieur à celui de la partie centrale, le rayon de courbure de la face concave 53 de la partie périphérique 52 est plus grand que celui de la face concave 51 de la partie centrale 50 (pour obtenir la même correction).

Ainsi, l'épaisseur e de la lentille ophtalmique 10 à sa périphérie (et donc à la périphérie de la partie périphérique 52) est inférieure d'un écart Δe à l'épaisseur qu'aurait eu la lentille à sa périphérie si elle avait été constituée uniformément du matériau formant la partie centrale 50.

On obtient ainsi une lentille ophtalmique dont l'épaisseur au bord est réduite (ce qui est avantageux sur le plan esthétique, pour le confort de port et le montage de la lentille, mais également pour alléger la lentille), tout en présentant une zone optique utile (qui correspond à la partie centrale construite comme expliqué ci-dessus) ayant un indice de réfraction relativement faible, ce qui évite notamment les problèmes de perception de franges colorées, améliorant ainsi le confort visuel du porteur. De plus, une telle lentille ophtalmique selon l'invention présente avantageusement un allégement par rapport à des lentilles classiques : en effet, la partie centrale est composée d'un matériau à bas indice, et il est connu que ces matériaux présentent en général une densité plus faible que les matériaux à haut indice.

La figure 4 représente les étapes principales d'un second exemple de procédé de fabrication additive utilisant la machine de fabrication additive de la figure 1.

Dans cet exemple, la lentille ophtalmique 10 est formée par couches successives. On commence donc par former une première couche de voxels sur le support de fabrication 12. Lors du premier passage par les étapes E20 à E28 décrite ci-après, la couche courante est donc la première couche.

La formation de la couche courante commence par exemple par le dépôt, au moyen de la première buse 13 et sous la commande du microprocesseur 3, d'un ensemble de voxels qui forment la partie centrale de la couche courante (étape E20).

Comme dans le mode de réalisation de la figure 2, la géométrie du dépôt est déterminée (soit directement, soit par détermination par le microprocesseur 3) sur la base des éléments de définition, mémorisés ici dans la mémoire modifiable 5.

La formation de la couche courante se poursuit à l'étape E22 par le dépôt, au moyen de la première buse 13 et de la seconde buse 14 et sous la commande du microprocesseur 3, de voxels formant une partie intermédiaire de la couche courante, autour de la partie centrale de la couche courante et notamment au contact d'une zone périphérique de la partie centrale de la couche courante.

La partie intermédiaire de la couche courante a ainsi une forme générale annulaire (c'est-à-dire de couronne), avec un rayon interne correspond au rayon de la partie centrale de la couche courante.

Dans la partie intermédiaire de la couche courante, certains voxels sont déposés par la première buse 13 tandis que d'autres voxels sont déposés par la second buse 14 :
- soit de manière également répartie sur l'ensemble de la partie intermédiaire (par exemple par dépôt d'une alternance d'un voxel déposé par la première buse 13 et d'un voxel déposé par la seconde buse 14), ce qui permet d'obtenir (ici après photo-polymérisation comme expliqué ci-après) une partie intermédiaire dont l'indice est compris entre l'indice du premier matériau et l'indice du second matériau ;
- soit de manière variable selon la zone de la partie intermédiaire concernée (par exemple par dépôt d'une proportion plus importante du matériau délivré par la première buse 13 dans les zones de la partie intermédiaire situées à proximité de la partie centrale et par dépôt d'une proportion plus importante du matériau délivré par la seconde buse 14 dans les zones de la partie intermédiaire éloignées de la partie centrale), ce qui permet d'obtenir un gradient (ici radial) d'indice dans la partie intermédiaire (l'indice variant typiquement entre l'indice du premier matériau et l'indice du second matériau, par exemple selon une fonction parabolique du rayon r à l'axe optique XX' de la lentille ophtalmique).

Comme précédemment, le lieu du dépôt des voxels destinés à former la partie intermédiaire est déterminé (soit directement, soit par détermination par le microprocesseur 3) sur la base des éléments de définition, mémorisés ici dans la mémoire modifiable 5.

On procède ensuite à l'étape E24 au dépôt, au moyen de la seconde buse 14 et sous la commande du microprocesseur 3, d'un ensemble de voxels qui forment la partie périphérique de la couche courante, autour de la partie intermédiaire de la couche courante et notamment au contact d'une zone périphérique de la partie intermédiaire de la couche courante.

La partie périphérique de la couche courante a ainsi une forme générale annulaire (c'est-à-dire de couronne), avec un rayon interne correspond au rayon externe de la partie intermédiaire de la couche courante.

On peut alors procéder à une étape E26 de photo-polymérisation de la couche courante (qui comprend la partie centrale déposée à l'étape E20, la partie intermédiaire déposée à l'étape E22 et la partie périphérique déposée à l'étape E24).

Comme déjà indiqué, en variante, l'étape de photo-polymérisation pourrait être réalisée à un autre moment, par exemple immédiatement après le dépôt de voxels par l'une des première et second buses 13, 14.

Le microprocesseur 3 détermine alors à l'étape E28 si la couche courante est la dernière couche à traiter ou non (par exemple sur la base des éléments de définition mémorisés dans la mémoire modifiable 5).

Dans la négative, on passe au traitement de la couche suivante (étape E30) et on boucle à l'étape E20 afin de mettre en oeuvre les étapes E20 à E28 avec la couche suivante en tant que couche courante.

Dans l'affirmative, le procédé de fabrication est terminé et la lentille ophtalmique est donc fabriquée (étape E32).

Dans la description qui précède, chaque couche comprend une partie centrale, une partie intermédiaire et une partie périphérique. On pourra naturellement prévoir que certains couches ne contient que certaines de ces parties, par exemple seulement la partie intermédiaire et la partie périphérique, voire seulement une de ces parties, par exemple la partie périphérique.

La figure 5 représente une vue en coupe de la lentille ophtalmique obtenue par le procédé de la figure 4.

Cette lentille ophtalmique comprend une partie centrale 60 (formée par la superposition des parties centrales des différentes couches successivement déposées comme décrit ci-dessus en référence à la figure 4), une partie intermédiaire 64 (formée par la superposition des parties intermédiaires des différentes couches successivement déposées) et une partie périphérique 62 (formée par la superposition des parties périphériques des différentes couches successivement déposées).

La partie centrale 60 a la forme générale d'un disque centré sur l'axe optique XX' de la lentille ophtalmique (c'est-à-dire une forme circulaire en projection dans un plan perpendiculaire à l'axe optique).

La partie intermédiaire 64 a une forme générale annulaire (en projection dans ce même plan perpendiculaire à l'axe optique) autour de la partie centrale 60 et de manière contigüe à cette partie centrale 60. La partie intermédiaire 64 s'étend par exemple (de manière continue) sur tout le pourtour de la partie centrale 60.

La partie périphérique 62 peut également avoir une forme générale annulaire (toujours en projection dans le plan perpendiculaire à l'axe optique susmentionné) autour de la partie intermédiaire 64, possiblement (de manière continue) sur tout le pourtour de la partie intermédiaire 64. La forme extérieure de la partie périphérique 62 (qui définit celle de la lentille ophtalmique) est par exemple circulaire ; en variante, elle pourrait toutefois être de forme différente, notamment pour s'adapter à la monture destinée à porter la lentille ophtalmique.

Comme déjà indiqué, la partie centrale 60 est formée du premier matériau et présente donc un indice de réfraction relativement faible, par exemple compris entre 1,50 et 1,59. La partie périphérique 62 est quant à elle formée du second matériau et présente donc un indice de réfraction plus élevé, par exemple compris entre 1,60 et 1,80.

La partie intermédiaire 64 peut quant à elle présenter de manière uniforme (à l'échelle de la partie intermédiaire) un indice intermédiaire, compris entre l'indice du premier matériau et l'indice du second matériau ; selon un autre mode de réalisation envisageable (comme expliqué ci-dessus), la partie intermédiaire peut présenter un gradient d'indice, ici radial, avec par exemple un indice variant de manière parabolique avec le rayon (par rapport à l'axe optique XX').

La lentille ophtalmique de la figure 4 présente les mêmes avantages que la lentille illustrée en figure 3, comme indiqué ci-dessus. En outre, grâce à la présence de la partie intermédiaire, les sauts d'indice sont moins importants d'une partie à l'autre, et la lentille ophtalmique a donc un aspect plus régulier.

Dans le procédé de la figure 4, la partie intermédiaire 64 est obtenue comme expliqué ci-dessus par la formation de voxels à partir de la première buse 13 et de la seconde buse 14.

En variante, on pourrait prévoir une troisième buse qui délivre un matériau dont l'indice de réfraction, après photo-polymérisation, soit compris entre l'indice de réfraction du premier matériau et l'indice de réfraction du second matériau et qui permette ainsi la constitution de voxels formant la partie intermédiaire 64.

On pourrait en outre prévoir d'autres buses supplémentaires qui délivrent chacune un matériau différent de façon à réaliser, par juxtaposition de voxels formés à partir des différentes buses, autant de parties annulaires intermédiaires situées entre la partie centrale et la partie périphérique, l'indice de réfraction variant d'une partie annulaire à l'autre (en augmentant en fonction du rayon moyen de la partie annulaire concernée par rapport à l'axe optique XX'), avec par exemple à chaque fois un saut d'indice Δn compris entre 0,01 et 0,1.

L'utilisation de l'invention permet d'envisager des gains d'épaisseurs au niveau des bords de la lentille ophtalmique, par rapport à une lentille ophtalmique pour myope formée d'un unique matériau ayant un indice de réfraction de 1,5 et obtenue selon des moyens de production traditionnels, d'au moins 20%, préférentiellement d'au moins 30% à 50%, voire plus de 50%. Ce gain d'épaisseur bord est notamment fonction de la différence d'indice entre le premier matériau et le second matériau, ainsi que de la puissance négative apportée à la lentille et du rayon de courbure de la face avant de celle-ci. Dans les modes traditionnels de réalisation d'une lentille ophtalmique (par exemple par injection) il est connu que l'épaisseur du bord va aussi dépendre du diamètre de base de la lentille utilisée pour réaliser la lentille ophtalmique destinée à une géométrie de monture particulière. Dans le cas présent, grâce à l'utilisation d'un procédé de fabrication additive, la lentille ophtalmique peut être réalisée directement avec la géométrie (ou avec une forme proche de la géométrie) de la monture et le procédé n'est donc plus soumis à cette contrainte.

A titre illustratif, le tableau ci-dessous donne les épaisseurs au bord de lentilles ophtalmiques pour myope de diamètre 65 mm, pour des puissances variant d'une dioptrie à huit dioptries et pour des matériaux ayant divers indices de réfraction n. Ce tableau illustre par exemple qu'une lentille de puissance 4 dioptries présente respectivement un gain d'épaisseur bord de 44% et de 37% selon qu'elle est constitué d'un matériau d'indice 1,67 ou 1,60 par rapport à un matériau d'indice 1,50.

| Correction (dioptries) | Epaisseur au bord (mm) pour un matériau n = 1,5 | Epaisseur au bord (mm) pour un matériau n = 1,6 | Epaisseur au bord (mm) pour un matériau n = 1,74 |
|---|---|---|---|
| 8 | 11,6 | 7,7 | 5,8 |
| 6 | 9,0 | 6,0 | 5,2 |
| 4 | 6,6 | 4,2 | 3,7 |
| 2 | 4,5 | 2,7 | 2,7 |
| 1 | 4,2 | 2,1 | 2,0 |

La réalisation de lentilles ophtalmiques pour myope conformément aux enseignements de l'invention présente un second avantage lié directement aux propriétés optiques de la lentille. En effet, les lentilles ophtalmiques obtenues par le procédé proposé ci-dessus ont une sphéricité optimisée et donc des qualités optiques améliorées.

En effet, grâce à un amincissement possible de la lentille en dehors de la zone utile (partie centrale), et donc dans la partie périphérique, il est possible de diminuer les distorsions liées à la puissance de la lentille et l'astigmatisme. En particulier, lorsque les deux faces de la lentille sont courbes, le rayon de courbure de la face arrière sera de fait plus proche de la valeur du rayon de courbure de la face avant, voir identique ou quasi-identique, cette adéquation des rayons de courbure des faces avant et arrière, permettant de diminuer directement les aberrations géométriques et donc d'augmenter la qualité optique du produit. L'astigmatisme oblique et le défaut de puissance sont ainsi minimisés. Le porteur a donc un meilleur champ de vision en particulier en périphérie.

## Revendications

1. Procédé de fabrication d'une lentille ophtalmique négative comprenant une partie centrale et une partie périphérique, **caractérisé en ce qu'**il comprend les étapes suivantes :
- formation de la partie centrale par constitution de voxels d'un premier matériau ayant un premier indice de réfraction, la partie centrale présentant une zone à sa périphérie ;
- formation de la partie périphérique à partir de ladite zone et contigüe au pourtour de ladite zone, par constitution de voxels d'au moins un second matériau ayant un second indice de réfraction, le second indice de réfraction étant strictement supérieur au premier indice de réfraction.

2. Procédé de fabrication selon la revendication 1, dans lequel le premier indice de réfraction est inférieur ou égal à 1,59.

3. Procédé de fabrication selon la revendication 2, dans lequel le premier indice de réfraction est compris entre 1,50 et 1,59 inclus.

4. Procédé de fabrication selon l'une des revendications 1 à 3, dans lequel le second indice de réfraction est supérieur ou égal à 1,60.

5. Procédé de fabrication selon la revendication 4, dans lequel le second indice de réfraction est compris entre 1,60 et 1,80 inclus.

6. Procédé de fabrication selon l'une des revendications 1 à 5, comprenant en outre une étape de formation d'une partie intermédiaire située à partir de ladite zone périphérique de la partie centrale et ladite partie périphérique, par constitution de voxels comprenant un premier matériau et un second matériau, l'indice de réfraction de ladite partie intermédiaire étant strictement supérieure à l'indice de réfraction de ladite partie centrale et strictement inférieure à l'indice de réfraction de ladite partie périphérique.

7. Procédé de fabrication selon la revendication 6, dans lequel la partie intermédiaire est constituée d'une pluralité de parties intermédiaires à partir de ladite partie centrale et ladite partie périphérique, l'indice de réfraction de chacune desdites parties intermédiaires étant croissante de façon radiale de la partie centrale vers la partie périphérique, cette variation d'indice radiale étant obtenu par la constitution de voxels comprenant successivement une quantité décroissante dudit de premier matériau au regard d'une quantité croissante dudit second matériau.

8. Procédé de fabrication selon l'une des revendications 1 à 7, dans lequel la constitution de voxels du premier matériau est réalisée par dépôt d'une première composition polymérisable au moyen d'une première buse d'impression et la constitution de voxels du second matériau est réalisée par dépôt d'une seconde composition polymérisable, différente de la première composition polymérisable, au moyen d'une seconde buse d'impression, lesdites première et seconde buse d'impression étant une seule buse ou deux buses distinctes.

9. Procédé de fabrication selon l'une des revendications 1 à 7, dans lequel la constitution de voxels du premier matériau est réalisée par dépôt d'un polymère thermoplastique à un état initial liquéfié ou en phase fluide au moyen d'une première unité de décharge et la constitution de voxels du second matériau est réalisée par dépôt d'un polymère thermoplastique à un état initial liquéfié ou en phase fluide au moyen d'une seconde unité de décharge, les première et seconde unité de décharge étant une seule unité ou deux unités distinctes.

10. Procédé de fabrication selon l'une des revendications 1 à 7, dans lequel la constitution de voxels du premier et du second matériau est réalisée par fusion de poudre polymère.

11. Procédé de fabrication selon l'une des revendications 1 à 7, dans lequel la constitution de voxels du premier et du second matériau est réalisée par stéréolitographie.

12. Procédé de fabrication selon l'une des revendications 1 à 7, dans lequel la constitution de voxels du premier et du second matériau est réalisée par extrusion d'un fil thermoplastique.

13. Procédé de fabrication selon l'une des revendications 1 à 12, dans lequel la partie centrale présente une forme générale circulaire ou elliptique.

14. Procédé de fabrication selon l'une des revendications 1 à 12, dans lequel la partie centrale présente une forme générale elliptique.

## Patentansprüche

1. Verfahren zur Herstellung einer negativen ophthalmischen Linse, umfassend einen zentralen Teil und einen peripheren Teil, **dadurch gekennzeichnet, dass** es die folgenden Schritte umfasst:
- Bildung des zentralen Teils durch Erstellung von Voxeln aus einem ersten Material mit einem ersten Brechungsindex, wobei der zentrale Teil eine Zone an seiner Peripherie aufweist;
- Bildung des peripheren Teils ausgehend von der Zone und angrenzend an den Umfang der Zone durch Erstellung von Voxeln aus mindestens einem zweiten Material mit einem zweiten Brechungsindex, wobei der zweite Brechungsindex unbedingt größer als der erste Brechungsindex ist.

2. Herstellungsverfahren nach Anspruch 1, bei dem der erste Brechungsindex kleiner oder gleich 1,59 ist.

3. Herstellungsverfahren nach Anspruch 2, bei dem der erste Brechungsindex zwischen 1,50 und 1,59 inkl. liegt.

4. Herstellungsverfahren nach einem der Ansprüche 1 bis 3, bei dem der zweite Brechungsindex größer oder gleich 1,60 ist.

5. Herstellungsverfahren nach Anspruch 4, bei dem der zweite Brechungsindex zwischen 1,60 und 1,80 inkl. liegt.

6. Herstellungsverfahren nach einem der Ansprüche 1 bis 5, ferner umfassend einen Schritt der Bildung eines Zwischenteils, der sich von der peripheren Zone des zentralen Teils und des peripheren Teils ausgehend befindet, durch Erstellung von Voxeln, umfassend ein erstes Material und ein zweites Material, wobei der Brechungsindex des Zwischenteils unbedingt größer als der Brechungsindex des zentralen Teils und unbedingt kleiner als der Brechungsindex des peripheren Teils ist.

7. Herstellungsverfahren nach Anspruch 6, bei dem der Zwischenteil von einer Vielzahl von Zwischenteilen ausgehend vom zentralen Teil und vom peripheren Teil gebildet ist, wobei der Brechungsindex jedes der Zwischenteile radial vom zentralen Teil zum peripheren Teil zunehmend ist, wobei diese radiale Indexvariation durch die Erstellung von Voxeln erhalten wird, die nacheinander eine abnehmende Menge des ersten Materials gegenüber einer zunehmenden Menge des zweiten Materials umfassen.

8. Herstellungsverfahren nach einem der Ansprüche 1 bis 7, bei dem die Erstellung von Voxeln des ersten Materials durch Aufbringen einer ersten polymerisierbaren Zusammensetzung mit Hilfe einer ersten Druckdüse erfolgt, und die Erstellung von Voxeln des zweiten Materials durch Aufbringen einer zweiten polymerisierbaren Zusammensetzung, die sich von der ersten polymerisierbaren Zusammensetzung unterscheidet, mit Hilfe einer zweiten Druckdüse erfolgt, wobei die erste und die zweite Druckdüse eine einzige Düse oder zwei getrennte Düsen sind.

9. Herstellungsverfahren nach einem der Ansprüche 1 bis 7, bei dem die Erstellung von Voxeln des ersten Materials durch Aufbringen eines thermoplastischen Polymers in einem verflüssigten Anfangszustand oder in flüssiger Phase mit Hilfe einer ersten Entladeeinheit erfolgt, und die Erstellung der Voxeln des zweiten Materials durch Aufbringen eines thermoplastischen Materials in einem verflüssigten Anfangszustand oder in flüssiger Phase mit Hilfe einer zweiten Entladeeinheit erfolgt, wobei die erste und zweite Entladeeinheit eine einzige Einheit oder zwei getrennte Einheiten sind.

10. Herstellungsverfahren nach einem der Ansprüche 1 bis 7, bei dem die Erstellung von Voxeln des ersten und des zweiten Materials durch Schmelzen von Polymerpulver erfolgt.

11. Herstellungsverfahren nach einem der Ansprüche 1 bis 7, bei dem die Erstellung von Voxeln des ersten und des zweiten Materials durch Stereolithographie erfolgt.

12. Herstellungsverfahren nach einem der Ansprüche 1 bis 7, bei dem die Erstellung von Voxeln des ersten und des zweiten Materials durch Extrusion eines thermoplastischen Drahtes erfolgt.

13. Herstellungsverfahren nach einem der Ansprüche 1 bis 12, bei dem der zentrale Teil eine allgemeine kreisförmige oder elliptische Form aufweist.

14. Herstellungsverfahren nach einem der Ansprüche 1 bis 12, bei dem der zentrale Teil eine allgemeine elliptische Form aufweist.

## Claims

1. Method for manufacturing a negative ophthalmic lens comprising a central portion and a peripheral portion, **characterized in that** it comprises the following steps:
- forming the central portion by forming voxels of a first material having a first refractive index, the central portion having a zone at its periphery;
- forming the peripheral portion from said zone and contiguous to the perimeter of said zone, by forming voxels of at least one second material having a second refractive index, the second refractive index being strictly higher than the first refractive index.

2. Manufacturing method according to claim 1, in which the first refractive index is lower than or equal to 1.59.

3. Manufacturing method according to claim 2, in which the first refractive index is comprised between 1.50 and 1.59, inclusive.

4. Manufacturing method according to one of claims 1-3, in which the second refractive index is higher than or equal to 1.60.

5. Manufacturing method according to claim 4, in which the second refractive index is comprised between 1.60 and 1.80, inclusive.

6. Manufacturing method according to one of claims 1-5, furthermore comprising a step of forming an intermediate portion located from said peripheral zone of the central portion and said peripheral portion, by forming voxels comprising a first material and a second material, the refractive index of said intermediate portion being strictly higher than the refractive index of said central portion and strictly lower than the refractive index of said peripheral portion.

7. Manufacturing method according to claim 6, in which the intermediate portion is formed from a plurality of intermediate portions from said central portion and said peripheral portion, the refractive index of each of said intermediate portions increasing radially from the central portion to the peripheral portion, this radial index variation being obtained by forming voxels comprising, in succession, a decreasing amount of said first material and an increasing amount of said second material.

8. Manufacturing method according to one of claims 1-7, in which the voxels of the first material are formed by depositing a first polymerizable composition by means of a first printing nozzle and the voxels of the second material are formed by depositing a second polymerizable composition, different from the first polymerizable composition, by means of a second printing nozzle, said first and second printing nozzles being a single nozzle or two separate nozzles.

9. Manufacturing method according to one of claims 1-7, in which the voxels of the first material are formed by depositing a thermoplastic polymer in an initial liquefied state or fluid phase by means of a first dispensing unit and the voxels of the second material are formed by depositing a thermoplastic polymer in an initial liquefied state or fluid phase by means of a second dispensing unit, the first and second dispensing units being a single unit or two separate units.

10. Manufacturing method according to one of claims 1-7, in which the voxels of the first and second material are formed by melting polymer powder.

11. Manufacturing method according to one of claims 1-7, in which the voxels of the first and second material are formed by stereolithography.

12. Manufacturing method according to one of claims 1-7, in which the voxels of the first and second material are formed by extruding a thermoplastic filament.

13. Manufacturing method according to one of claims 1-12,, in which the central portion has a generally circular or elliptical shape.

14. Manufacturing method according to one of claims 1-12, in which the central portion has a generally elliptical shape.
